# NEUE EUROPÄISCHE PATENTSCHRIFT

(11) **EP 1 620 640 B2**
(45) Veröffentlichungstag und Bekanntmachung des Hinweises auf die Entscheidung über den Einspruch: **03.09.2014**
(45) Hinweis auf die Patenterteilung: 06.07.2011
(21) Anmeldenummer: 04729041.6
(22) Anmeldetag: 23.04.2004
(51) Int. Cl.: F02D 41/00, F02D 19/06

(54) **VERBRENNUNGSMOTOR FÜR DEN BETRIEB MIT ZWEI UNTERSCHIEDLICH KLOPFFESTEN KRAFTSTOFFEN**
INTERNAL COMBUSTION ENGINE OPERATED WITH TWO FUELS THAT HAVE DIFFERENT KNOCK RESISTANCE
MOTEUR A COMBUSTION INTERNE FONCTIONNANT AVEC DEUX CARBURANTS A POUVOIR ANTIDETONANT DIFFERENT

(30) Priorität: 26.04.2003 DE 10318963
(43) Veröffentlichungstag der Anmeldung: 01.02.2006
(73) Patentinhaber: GM Global Technology Operations LLC, Detroit, MI 48265-3000 (US); BRA GmbH, 97424 Schweinfurt (DE)
(72) Erfinder: JAUSS, Andreas, 56479 Westernohe (DE); BRAUNE, Mathias, 97422 Schweinfurt (DE)
(74) Vertreter: Manitz, Finsterwald & Partner GbR
(86) Internationale Anmeldenummer: PCT/DE2004/000844
(87) Internationale Veröffentlichungsnummer: WO 2004/097198

(56) Entgegenhaltungen:
- EP-A- 0 964 138
- WO-A-02/48528
- JP-A- 2001 271 682
- PATENT ABSTRACTS OF JAPAN Bd. 012, Nr. 400 (M-756), 24. Oktober 1988 (1988-10-24) -& JP 63 143360 A (MAZDA MOTOR CORP), 15. Juni 1988 (1988-06-15)
- PATENT ABSTRACTS OF JAPAN Bd. 2000, Nr. 22, 9. März 2001 (2001-03-09) & JP 2001 127682 A (MITSUBISHI ELECTRIC CORP), 11. Mai 2001 (2001-05-11)

## Beschreibung

Die Erfindung behandelt einen Verbrennungsmotor für den Betrieb mit wenigstens zwei unterschiedlich klopffesten Kraftstoffen, mit wenigstens einem Zylinder, in dem die Verbrennung des Kraftstoffs zyklisch stattfindet, und einem Dosiersystem zum Zuführen einer geregelten Menge an Kraftstoff in den Zylinder in jedem Zyklus. Einem solchen erfindungsgemäßen Verbrennungsmotor lassen sich beispielsweise entweder Erdgas oder Benzin als Kraftstoff zuführen.

Es sind sogenannte Vielstoffmotore nach dem Otto-Prinzip bekannt, die mit unterschiedlichen Kraftstoffen arbeiten können. In einem solchen Motor wird ein Luft-Kraftstoff-Gemisch vor einer fremdeingeleiteten Zündung verdichtet. Das Verdichten kann auch vor der fremdeingeleiteten Zündung zu einer spontanen Zündung führen, die unerwünscht ist. Im Allgemeinen weisen verschiedene Kraftstoffe unterschiedliche Klopffestigkeiten auf, d. h. ihr Gemisch mit Luft kann unterschiedlich stark verdichtet werden, bevor es zur spontanen Entzündung kommt. Um den Kraftstoff optimal zu nutzen, ist es wünschenswert, ihn vor dem fremdeingeleiteten Zünden so stark wie möglich zu verdichten. Die geometrische Verdichtung eines Motors ist jedoch meist eine durch seine Konstruktion festgelegte, unveränderliche Größe. Daher kann ein solcher Motor nur für einen Kraftstoff mit einer bestimmten Klopffestigkeit optimal konstruiert und justiert sein. Wird dieser Motor mit einem anderen Kraftstoff mit geringerer Klopffestigkeit betrieben, so kann es zum Klopfen kommen, wodurch der Motor beschädigt werden kann.

Aus der JP 63 143360 A ist ein Verbrennungsmotor der eingangs genannten Art bekannt. Bei diesem Verbrennungsmotor ist ein Klopfsensor vorgesehen, mit dem auftretende Klopfsignale erfasst und analysiert werden. Abhängig von den erfassten Klopfsignalen wird das Dosiersystem angesteuert, von einer Charakteristik A auf eine Charakteristik B umzuschalten, bei der der obere Grenzwert der Drosselklappenöffnung verändert wird.

Aus der WO 02/48528 A ist ein Verbrennungsmotor bekannt, der für den Betrieb mit weniger klopffestem Kraftstoff ausgelegt ist. Um eine ausreichende Leistung auch bei einem Betrieb mit klopffesterem Kraftstoff zu erreichen, ist der Verbrennungsmotor mit einem Ladekompressor ausgerüstet, der bei Verwendung eines Kraftstoffs geringer Energiedichte zumindest bei erhöhtem Leistungsbedarf zugeschaltet wird.

Aus der JP 2001-271682 A ist ein Verbrennungsmotor für den Betrieb mit wenigstens zwei unterschiedlich klopffesten Kraftstoffen bekannt, wobei bei der Verwendung von klopffestem Kraftstoff die zugeführte Menge an Luft-Kraftstoff-Gemisch kleiner ist als bei der Verwendung von weniger klopffestem Kraftstoff. Die Menge des zugeführten Luft-Kraftstoff-Gemischs wird durch eine variable Steuerung eines Einlassventils eingestellt.

Es ist Aufgabe der Erfindung, einen Verbrennungsmotor zu schaffen, der mit zwei unterschiedlich klopffesten Kraftstoffen betrieben werden kann und dabei sowohl einen guten Wirkungsgrad beim Betrieb mit dem klopffesteren Kraftstoff erreicht als auch ein Klopfen beim Betrieb mit dem weniger kopffesten Kraftstoff wirksam vermeidet.

Die Aufgabe wird durch einen Verbrennungsmotor mit den Merkmalen des Anspruchs 1 gelöst.

Der erfindungsgemäße Verbrennungsmotor ist durch sein geometrisches Verdichtungsverhältnis für den Betrieb mit dem klopffesteren der betrachteten Kraftstoffe optimiert. Ein Klopfen beim Betrieb mit dem weniger klopffesten Kraftstoff wird dadurch vermieden, dass das Dosiersystem eingerichtet ist, bei Verwendung des weniger klopffesten Kraftstoffes eine kleinere Menge an Luft-Kraftstoff-Gemisch zuzuführen als bei Verwendung des klopffesteren Kraftstoffs, was einer Verringerung des effektiven Verdichtungsverhältnisses für den weniger klopffesten Kraftstoff entspricht. Der Druck dieser kleineren Menge im Zylinder ist geringer, als wenn eine größere Menge des klopffesteren Gemischs zugeführt wird, so dass kritische Zustandsgrößen, die zur spontanen Verbrennung des Kraftstoffs führen können, auch am oberen Totpunkt des Zylinders noch nicht erreicht werden.

Eine Verringerung der Menge des weniger klopffesten Gemisches wird man zweckmäßigerweise nur dann vorsehen, wenn dies zur Unterdrückung des Klopfens tatsächlich erforderlich ist, insbesondere im hohen Drehzahlbereich des Motors. Bei niedrigen Drehzahlen hingegen kann die zugeführte Gemischmenge für beide Kraftstoffe die gleiche sein.

Die Steuerung der zugeführten Gemischmenge ist dadurch realisiert, dass das Dosiersystem über wenigstens zwei Dosiervorschriften verfügt und die zum Dosieren des Luft-Kraftstoff-Gemisches verwendete Vorschrift jeweils anhand des zugeführten Kraftstoffs auswählt.

Die Dosiervorschrift spezifiziert vorzugsweise die maximal zuzuführende Menge an Luft-Kraftstoff-Gemisch als Funktion der Drehzahl des Verbrennungsmotors.

Der Verbrennungsmotor weist eine Ventilanordnung mit einer Mehrzahl von Schaltstellungen auf, in denen jeweils einer von mehreren Eingängen der Ventilanordnung, die jeweils mit einem Tank für unterschiedliche Kraftstoffe verbunden sein können, mit einer Zufuhrleitung des Motors verbunden ist, wobei die von dem Dosiersystem verwendete Dosiervorschrift an die Schaltstellung der Ventilanordnung gekoppelt ist. Dies ermöglicht bei einem Umschalten von einem klopffesten auf einen weniger klopffesten Kraftstoff eine Anpassung der dem Zylinder zugeführten Gemischmenge rechtzeitig mit Beginn der Verbrennung des weniger klopffesten Kraftstoffs und somit einen wirksamen Schutz des Motors.

Eine solche Ventilanordnung kann z. B. durch ein Wegeventil, das wahlweise einen der Tanks mit der Zufuhrleitung des Motors verbindet, oder durch zwei Sperrglieder, die jeweils zwischen einem der Tanks und der Zufuhrleitung angeordnet sind, gebildet sein. Die erste Alternative bietet sich insbesondere bei Kraftstoffen an, die über einen gemeinsamen Injektor in die Zufuhrleitung eingespeist werden können, d. h. insbesondere für zwei flüssige Kraftstoffe. Die zweite Alternative erlaubt die Verwendung von unterschiedlichen Injektoren für die verschiedenen Kraftstoffe und ist daher bevorzugt, wenn Kraftstoffe mit unterschiedlichen Aggregatzuständen eingesetzt werden.

Zum Dosieren der zugeführten Gemischmenge verfügt das Dosiersystem zweckmäßigerweise über einen Engpass mit steuerbarem Querschnitt in der Zufuhrleitung. Der Engpass ist vorzugsweise in einem stromaufwärts vom Injektor/den Injektoren gelegenen Stelle in der Zufuhrleitung angeordnet, d. h. an einer Stelle, wo die Zufuhrleitung nur Luft führt. Durch Reduzieren des Querschnitts bei Verwendung eines wenig klopffesten Kraftstoffs kann die zugeführte Luftmenge reduziert werden. Entsprechend dieser Luftmenge regelt das Dosiersystem die am Injektor eingespeiste Kraftstoffmenge, so dass ein gewünschtes Luft-Kraftstoff-Verhältnis bei der Verbrennung eingehalten wird.

Bei dem Engpass handelt es sich vorzugsweise um eine Drosselklappe. Während herkömmlicherweise deren Durchgangsquerschnitt allein durch das Steuersignal festgelegt ist, das z. B. mit Hilfe eines Fahrpedals erzeugt wird, hängt erfindungsgemäß die Stellung der Drosselklappe nicht nur von dem Steuersignal, sondern zusätzlich von der Art des verwendeten Kraftstoffs ab.

Besonders bevorzugt verfügt das Dosiersystem über einen Vorverdichter oder Lader in der Zufuhrleitung, dessen Sekundärdruck bei Verwendung des weniger klopffesten Kraftstoffs niedriger als bei Verwendung des klopffesteren Kraftstoffs eingestellt sein kann. Auch dieser ist vorzugsweise stromaufwärts von dem Injektor/den Injektoren in der Zufuhrleitung angeordnet, so dass er nur auf die dem Motor zugeführte Frischluft wirkt, und die am Injektor eingespeiste Kraftstoffmenge wird vom Dosiersystem jeweils so geregelt, dass das gewünschte Luft-Kraftstoff-Verhältnis bei der Verbrennung eingehalten wird.

Bevorzugterweise ist der Verbrennungsmotor für den Betrieb mit einem flüssigen Kraftstoff, insbesondere Benzin und mit einem gasförmigen Kraftstoff, insbesondere Erdgas ausgelegt. Dabei ist der Begriff "gasförmig" nicht unbedingt auf den Aggregatzustand zu beziehen, in dem der Kraftstoff in einem Tank des Fahrzeugs vorliegt, sondern auf den Aggregatzustand, in dem er vor der Verbrennung mit Luft gemischt wird.

Bei einem solchen Motor ist die Ventilanordnung vorzugsweise gebildet durch ein erstes Sperrventil, das zwischen dem Tank für den gasförmigen Kraftstoff und der Kraftstoffzufuhrleitung des Motors angeordnet ist, und eine zwischen dem Tank für den flüssigen Kraftstoff und der Kraftstoffzufuhrleitung angeordnete Pumpe, die im ausgeschalteten Zustand eine Sperrwirkung entfaltet und so als zweites Sperrventil fungiert.

Vorteilhafterweise weist der Verbrennungsmotor ein Verdichtungsverhältnis von wenigstens 11,5, vorzugsweise von ca. 12,5 bis 13 auf. Dieses Verdichtungsverhältnis ist höher als das für benzinbetriebene Motoren typische Verhältnis von ca. 10,5 und gut an die hohe Klopffestigkeit von Erdgas angepasst.

Die Aufgabe der Erfindung wird auch durch ein Verfahren mit den Merkmalen des Anspruchs 14 gelöst.

Dabei wird vorzugsweise, wenn ein anderer als der klopffesteste Kraftstoff ausgewählt ist, die zugeführte Menge an Gemisch kleiner als die maximal dem Motor zuzuführende Gemischmenge gehalten, um zu verhindern, dass das Gemisch im Zylinder Zustandsgrößen erreicht, bei denen Klopfgefahr besteht.

Vorteilhafterweise wird das Verfahren zum Verbrennen von Benzin in einem Motor mit einem Verdichtungsverhältnis von mindestens 11,5, vorzugsweise ca. 12,5 bis 13, eingesetzt.

Im Folgenden wird ein Ausführungsbeispiel für einen erfindungsgemäßen Verbrennungsmotor näher beschrieben. Dabei zeigen:
- Fig. 1: eine schematische Darstellung eines Fahrzeugs mit einem erfindungsge- mäßen Verbrennungsmotor;
- Fig. 2: Motorkennlinien des erfindungsge- mäßen Verbrennungsmotors bei Erd- gasbetrieb; und
- Fig. 3: Motorkennlinien des erfindungsge- mäßen Verbrennungsmotors bei Ben- zinbetrieb.

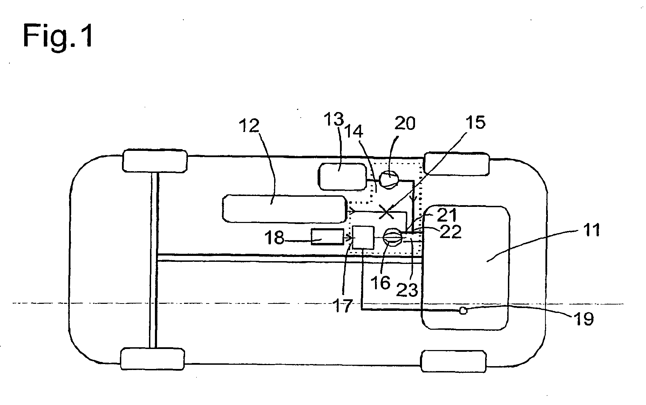

Als Beispiel für einen erfindungsgemäßen Verbrennungsmotor wird anhand von Fig. 1 ein Otto-Motor beschrieben, der sowohl mit Erdgas als auch mit Benzin betrieben werden kann. Der erfindungsgemäße Otto-Motor hat einen Motorblock 11 mit typischerweise vier oder sechs Zylindern, der für einen hauptsächlichen Betrieb mit Erdgas als Kraftstoff konstruiert und ausgelegt ist. Da die Klopffestigkeit von Erdgas der eines Benzins mit bis zu ROZ 130 entspricht, während Normalbenzin einen Wert von ROZ 95 aufweist, ist der erfindungsgemäße Otto-Motor mit einer Verdichtung von ca. 13:1 gegenüber einer Verdichtung von 10,5:1 gewöhnlicher, benzinbetriebener Otto-Motoren ausgeführt. Diese größere Verdichtung wird durch die höhere Klopffestigkeit von Erdgas gegenüber Benzin ermöglicht und führt zu einem höheren thermischen Wirkungsgrad des erfindungsgemäßen Otto-Motors, der um 5 % bis 7 % über dem thermischen Wirkungsgrad eines benzinbetriebenen normalen Otto-Motors liegt.

Der Motorblock 11 ist in einem Kraftfahrzeug eingebaut, das über zwei Kraftstofftanks 12, 13 verfügt, einen Haupttank 12 für Erdgas und einen Hilfstank 13 für Benzin. Der Hilfstank 13 für Benzin ist notwendig, da derzeit die Zahl der Tankstellen, an denen Erdgas getankt werden kann, noch gering ist und es notwendig werden kann, das Fahrzeug zeitweise mit Benzin zu betreiben, um die nächstgelegene Erdgastankstelle auch dann sicher erreichen zu können, wenn der Haupttank 12 leer ist.

Im Reservebetrieb wird daher der erfindungsgemäße Otto-Motor mit Benzin statt mit Erdgas betrieben. Jedoch würde Benzin bei der hohen Verdichtung von ca. 13:1, für die der erfindungsgemäße Otto-Motor ausgelegt ist, klopfend verbrennen und zu Motorschäden führen, wenn bei Benzinbetrieb dem Motor die gleiche maximale Menge an Luft-Kraftstoff-Gemisch zugeführt würde, die für den Betrieb mit Erdgas bei gleicher Drehzahl des Motors angemessen ist. Um dies zu verhindern, ist ein Dosiersystem 14 des erfindungsgemäßen Otto-Motors, das dazu dient, dem Motorblock 11 normalerweise Erdgas aus dem Tank 12, und wenn dieser leer ist, Benzin aus dem Tank 13 zuzuführen, ausgelegt, bei der Dosierung der dem Motor in jedem Verbrennungszyklus zugeführten Gemischmenge die Art des zugeführten Kraftstoffs zu berücksichtigen.

Das Dosiersystem 14 umfasst eine Ventilanordnung, eine Drosselklappe 16 und eine elektronische Steuerschaltung 17. Die Ventilanordnung dient dazu, jeweils nur den Zutritt eines Kraftstoffs zu einer Zufuhrleitung 23 des Motors zuzulassen. Sie umfasst ein Sperrventil 15 und eine Benzinpumpe 20, die jeweils den Haupttank 12 bzw. den Hilfstank 13 mit einem Injektor 21 bzw. 22 verbinden, der an der Zufuhrleitung 23 des Motors abgeordnet ist. In der Zufuhrleitung ist stromaufwärts von den Injektoren 21, 22 auch die Drosselklappe 16 angeordnet. Die Benzinpumpe 20 ist von einer Bauart, die, wenn sie nicht in Betrieb ist, die Leitung, in der sie angeordnet ist, absperrt, z. B. eine Kolbenpumpe. Dadurch ist beim Betrieb mit Erdgas ausgeschlossen, dass gleichzeitig Benzin in die Zufuhrleitung 23 gelangt oder Erdgas-Luft-Gemisch den Hilfstank erreicht.

Die elektronische Steuerschaltung 17 empfängt über einen ersten Signaleingang ein z. B. von der Stellung eines Fahrpedals 18 abhängiges Leistungswunschsignal, über einen zweiten Signaleingang ein Signal von einem an einer Welle des Motors 11 angeordneten Drehzahlsensor 19 und über einen dritten Signaleingang ein Signal, das die anzeigt, welche Kraftstoffversorgung momentan in Betrieb ist, d. h. ob das Sperrventil 15 offen oder die Benzinpumpe 20 eingeschaltet ist. Je nachdem, welche Kraftstoffversorgung in Betrieb ist, verwendet die Steuerschaltung 17 eine von zwei vorgegebenen, jeweils in einem elektronischen Speicher der Steuerschaltung abgelegten Dosiervorschriften, um die Stellung der Drosselklappe 16 und damit die Menge an jedem Zylinder zugeführtem Luft-Kraftstoff-Gemisch zu regeln. Diese Dosiervorschriften legen die zugeführte Gemischmenge in Abhängigkeit von der vom Motor verlangten Leistung bzw. der hierfür repräsentativen Stellung des Fahrpedals 18 fest. Zumindest die für den weniger klopffesten Kraftstoff verwendete Dosierungsvorschrift beinhaltet ferner eine obere Grenze der zugeführten Gemischmenge, die unabhängig von der jeweils verlangten Leistung nicht überschritten werden soll, um Klopfen im Motor 11 zu vermeiden. Diese obere Grenze ist festgelegt in Abhängigkeit von der von dem Sensor 19 erfassten Drehzahl des Motors. Sie kann ermittelt werden, in dem an einem Motorprototypen für eine Mehrzahl von Drehzahlen die mechanische Belastung variiert wird und die obere Grenze der zugeführten Gemischmenge ausgetestet wird, die zugeführt werden darf, ohne dass es zum Klopfen kommt. Dabei zeigt sich, dass es insbesondere bei hohen Drehzahlen erforderlich ist, die maximal zugeführte Gemischmenge für das weniger klopffeste Gemisch auf einen Wert zu begrenzen, der kleiner ist als die bei gleicher Drehzahl maximal zugeführte Menge des klopffesten Gemisches, während bei niedrigeren Drehzahlen die maximal zugeführten Mengen eventuell auch gleich angesetzt werden können.

Selbstverständlich kann eine solche drehzahlabhängige obere Grenze der zugeführten Gemischmenge auch für den klopffesteren Kraftstoff insbesondere in bestimmten Drehzahlbereichen vorgesehen werden.

Die Regelung der Gemischmenge, die unterhalb dieser Obergrenze in Abhängigkeit von der Belastung des Motors bzw. der ihm abverlangten Leistung gesteuert wird, kann im Prinzip in herkömmlicher Weise erfolgen, wobei allerdings die Abhängigkeit der zugeführten Gemischmenge von der verlangten Leistung bei gegebener Drehzahl für beide Kraftstoffe unterschiedlich sein kann.

Anstelle der Drosselklappe 16 kann in der Zufuhrleitung 23 auch ein Vorverdichter oder Lader angeordnet sein, der Frischluft mit einem regelbaren Überdruck in die Zufuhrleitung einspeist. In diesem Fall setzt sich die effektive Verdichtung des Luft-Kraftstoff-Gemischs im Zylinder zusammen aus der Vorverdichtung durch den Lader und der geometrischen Verdichtung im Zylinder. In analoger Weise wie oben für die Drosselklappe beschrieben, lässt sich auch durch Betreiben des Laders mit je nach verwendetem Kraftstoff unterschiedlicher Verdichtung die dem Zylinder zugeführte Gemischmenge bei Verwendung des weniger klopffesten Kraftstoffs verringern.

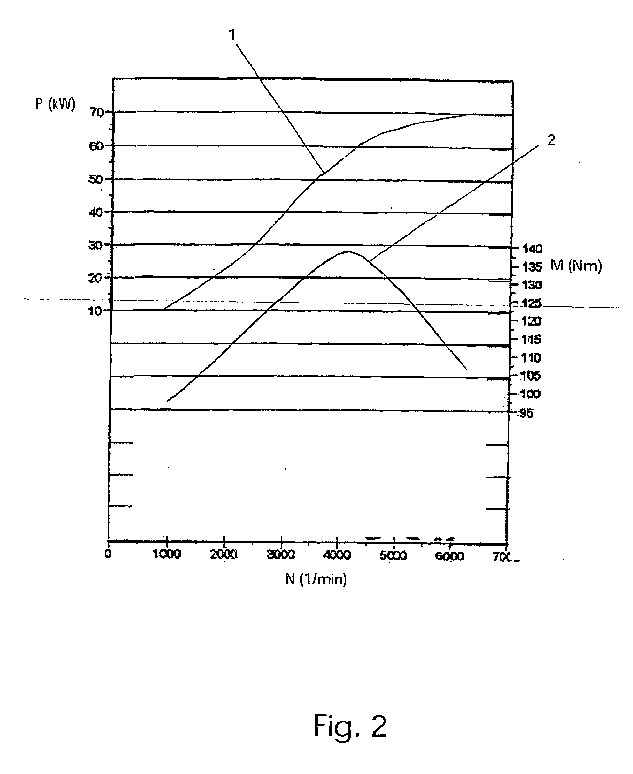

In Fig. 2 sind in einem Diagramm verschiedene Motorkennlinien des erfindungsgemäßen Otto-Motors dargestellt, die auf einem Prüfstand ermittelt wurden. Der Otto-Motor wurde dabei mit Erdgas betrieben. Alle Kennlinien sind in Abhängigkeit von der Drehzahl des Motors aufgetragen, die entlang der X-Achse in Umdrehungen pro Minute eingetragen ist. Kennlinie 1 zeigt die ermittelte Motorleistung. Diese beginnt bei einer Motordrehzahl von 1000 U/min bei 10 kW und steigt bis zu einer Motordrehzahl von knapp oberhalb 6000 U/min auf 70 kW an. Der Anstieg verläuft dabei monoton wachsend mit einem leichten Knick bei ungefähr 4000 U/min und 60 kW.

Kennlinie 2 stellt das vom Motor erzeugte Drehmoment M dar. Es beginnt bei 1000 U/min mit rund 98 Nm und steigt bis knapp oberhalb 4000 U/min auf rund 137 Nm an, um über 4000 U/min hinaus wieder abzufallen.

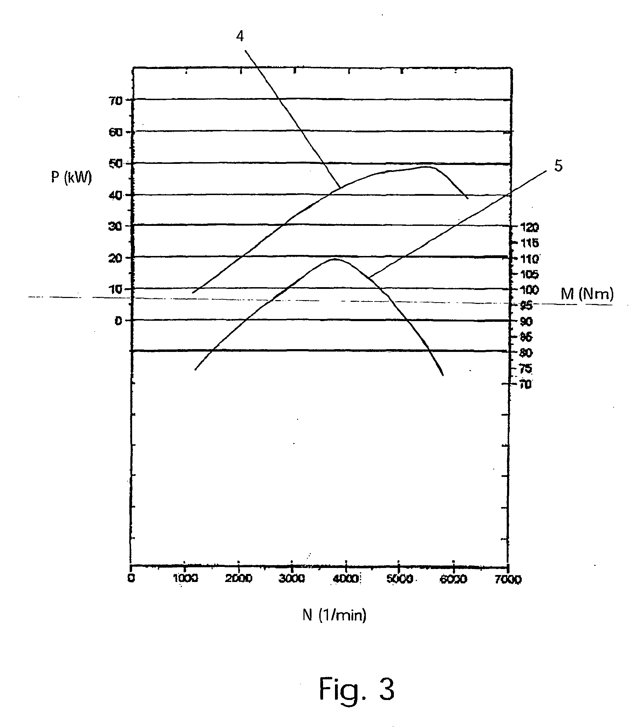

Fig. 3 zeigt entsprechende Kennlinien für denselben Motor, wenn er mit Benzin als Kraftstoff betrieben wird. Auf den ersten Blick ist ein ungleichmäßigerer Verlauf der Kennlinien der Fig. 3 im Vergleich zu den Kennlinien der Fig. 2 zu bemerken. So wächst beispielsweise die Kennlinie 4 für die Motorleistung P im Bereich von 1000 U/min bis 4000 U/min streng monoton von 10 kW auf ungefähr 47 kW an, um bei Drehzahlen oberhalb von 4000 U/min einen abwechselnd abfallenden und steigenden Verlauf aufzuweisen. Im dargestellten Drehzahlbereich erreicht die Kennlinie 4 knapp oberhalb 5000 U/min ihr Maximum mit 52 kW. Dieses Maximum liegt deutlich unterhalb des Maximums von 70 kW der Kennlinie 1.

Ähnlich verhält es sich mit der Kennlinie 5 für das Drehmoment M des Motors. Diese steigt im Bereich von 1000 U/min bis 4000 U/min von 75 Nm auf 113 Nm monoton wachsend an. Oberhalb 4000 U/min fällt sie jedoch stärker ab als die Kennlinie 2, um zwischen 4500 U/min bis 5500 U/min geringfügig anzusteigen und anschließend abrupt abzufallen.

Ein direkter Vergleich der Leistungskennlinien 1 und 4 zeigt, dass die mit Benzin als Kraftstoff erreichte Leistung für Drehzahlen N bis 4000 U/min geringfügig kleiner als die mit Erdgas erreichte ist. Mit steigender Drehzahl N vergrößert sich der Unterschied zwischen den Kennlinien 1 und 4. Für Drehzahlen N oberhalb 4000 U/min macht sich die Differenz der Kurven 1 und 4 deutlich bemerkbar, d. h. für diese Drehzahlen sind mit dem Motor im Benzinbetrieb deutlich schwächere Leistungen zu erzielen.

Die abgefallene Motorleistung P und das kleinere Drehmoment M des Motors sind im allgemeinen jedoch zweitrangig und hinnehmbar, da der Betrieb des Motors mit Benzin nur im Reservebetrieb bzw. im Notbetrieb erfolgt.,Die zur geringeren Leistung führende Begrenzung der Gemischmenge verhindert zuverlässig ein motorschädliches Klopfen im Betrieb mit dem weniger klopffesten Kraftstoff.

### Bezugszeichenliste

- 1.: Leistungskennlinie
- 2.: Drehmoment
- 3.: Luftverhältnis
- 4.: Leistungskennlinie
- 5.: Drehmoment
- 6.: Luftverhältnis
- 11: Motorblock
- 12: Haupttank
- 13: Hilfstank
- 14: Dosiersystem
- 15: Sperrventil
- 16: Drosselklappe
- 17: Steuerschaltung
- 18: Gaspedal
- 19: Drehzahlmesser
- 20: Pumpe
- 21: Injektor
- 22: Injektor
- 23: Zufuhrleitung

## Patentansprüche

1. Verbrennungsmotor für den Betrieb mit wenigstens zwei unterschiedlich klopffesten Kraftstoffen, mit wenigstens einem Zylinder, in dem die Verbrennung des Kraftstoffs zyklisch stattfindet, und einem Dosiersystem (14) zum Zuführen einer anhand eines Steuersignals geregelten Menge an Luft-Kraftstoff-Gemisch in den Zylinder in jedem Zyklus, wobei das Dosiersystem (14) eingerichtet ist, bei Verwendung des weniger klopffesten Kraftstoffes bei einem gegebenen Wert des Steuersignals eine erste Menge an Luft-Kraftstoff-Gemisch zuzuführen, die kleiner ist als eine bei Verwendung des klopffesteren Kraftstoffs beim gleichen Wert des Steuersignals zugeführte zweite Menge, und wobei der Verbrennungsmotor ein geometrisches Verdichtungsverhältnis aufweist, das für den Betrieb mit dem klopffesteren Kraftstoff optimiert ist,
**dadurch gekennzeichnet,**
**dass** der Verbrennungsmotor eine Ventilanordnung (15, 20) mit mehreren Eingängen für die verschiedenen Kraftstoffe und mit einer Mehrzahl von Schaltzuständen aufweist, in denen jeweils einer der Eingänge mit einer Zufuhrleitung (23) des Verbrennungsmotors verbunden ist,
**dass** das Dosiersystem (14) zum Steuern der zugeführten Gemischmenge über wenigstens zwei Dosiervorschriften für die zwei unterschiedlichen Kraftstoffe verfügt und die zum Dosieren des Luft-Kraftstoff-Gemischs verwendete Vorschrift an den Schaltzustand der Ventilanordnung (15, 20) gekoppelt ist und anhand des Schaltzustands ausgewählt wird, und dass
das Dosiersystem (14) eingerichtet ist, um bei Verwendung des weniger klopffesten Kraftstoffes gegenüber der Verwendung des klopffesteren Kraftstoffes die Frischluftzufuhr durch eine in der Frischluftzufuhrleitung (23) angeordnete Drosselklappe (16) oder den Sekundärdruck eines in der Frischluftzufuhrleitung (23) angeordneten Laders oder Vorverdichters zu reduzieren und
abhängig von der eingestellten Frischluftmenge bzw. des eingestellten Sekundärdruckes die über einen Injektor (21, 22) eingespeiste Kraftstoffmenge so zu regeln, dass ein gewünschtes Luft-KraftstoffVerhältnis bei der Verbrennung eingehalten wird.

2. Verbrennungsmotor nach Anspruch 1, **dadurch gekennzeichnet, dass** das Dosiersystem eingerichtet ist, nur unter definierten Betriebsbedingungen des Motors die kleinere Menge des weniger klopffesten Gemischs zuzuführen und sonst entweder das klopffestere oder das weniger klopffeste Gemisch in jeweils gleicher Menge zuzuführen.

3. Verbrennungsmotor nach Anspruch 2, **dadurch gekennzeichnet, dass** die definierten Betriebsbedingungen einem hohen Drehzahlbereich des Motors entsprechen.

4. Verbrennungsmotor nach Anspruch 1, **dadurch gekennzeichnet, dass** jede Dosiervorschrift eine maximal zuzuführende Menge an Luft-Kraftstoff-Gemisch als Funktion der Drehzahl des Verbrennungsmotors spezifiziert.

5. Verbrennungsmotor nach Anspruch 1, **dadurch gekennzeichnet, dass** die Ventilanordnung eine Mehrzahl von jeweils zwischen einem der Eingänge und der Zufuhrleitung (23) angeordneten Sperrgliedem (15, 20) umfasst.

6. Verbrennungsmotor nach Anspruch 5, **dadurch gekennzeichnet, dass** eines der Sperrglieder ein Sperrventil (15) und eines eine Pumpe (20) ist.

7. Verbrennungsmotor nach einem der Ansprüche 1, 5 oder 6, **dadurch gekennzeichnet, dass** die Drosselklappe (16) einen in der Zufuhrleitung (23) angeordneten Engpass mit steuerbarem Querschnitt bildet.

8. Verbrennungsmotor nach einem der vorhergehenden Ansprüche, **dadurch gekennzeichnet, dass** er für den Betrieb mit Benzin und mit Erdgas ausgelegt ist.

9. Verbrennungsmotor nach einem der vorhergehenden Ansprüche, **dadurch gekennzeichnet, dass** er ein Verdichtungsverhältnis von wenigstens 11,5, vorzugsweise von ca. 12,5 bis 13, aufweist.

10. Verfahren zum Betreiben eines Verbrennungsmotors, bei dem ein Kraftstoff unter wenigstens zwei Kraftstoffen unterschiedlicher Klopffestigkeit ausgewählt wird und einem Zylinder des Motors zyklisch eine in Abhängigkeit von einem Steuersignal geregelte Menge eines Gemisches von Luft und dem Kraftstoff zugeführt und in dem Zylinder zur Verbrennung gebracht wird, wobei die bei gleichem Wert des Steuersignals zugeführte Menge für den weniger klopffesten Kraftstoff wenigstens unter definierten Betriebsbedingungen kleiner ist als für den klopffesteren Kraftstoff und der Verbrennungsmotor ein geometrisches Verdichtungsverhältnis aufweist, das für den Betrieb mit dem klopffesteren Kraftstoff optimiert ist,
**dadurch gekennzeichnet ,**
**dass** ein Verbrennungsmotor mit einer Ventilanordnung (15, 20) mit mehreren Eingängen für die verschiedenen Kraftstoffe und mit einer Mehrzahl von Schaltzuständen verwendet wird, in denen jeweils einer der Eingänge mit einer Zufuhrleitung (23) des Verbrennungsmotors verbunden ist, dass zum Steuern der zugeführten Gemischmenge wenigstens zwei Dosiervorschriften für die zwei unterschiedlichen Kraftstoffe vorgesehen sind und die zum Dosieren des Luft-Kraftstoff-Gemischs verwendete Vorschrift an den Schaltzustand der Ventilanordnung (15, 20) gekoppelt ist und anhand des Schaltzustands ausgewählt wird, und dass
bei Verwendung des weniger klopffesten Kraftstoffes gegenüber der Verwendung des klopffesteren Kraftstoffes die Frischluftzufuhr durch eine in der Frischluftzufuhrleitung (23) angeordnete Drosselklappe (16) oder der Sekundärdruck eines in der Frischluftzufuhrleitung (23) angeordneten Laders oder Vorverdichters reduziert wird und
abhängig von der eingestellten Frischluftmenge bzw. des eingestellten Sekundärdruckes die über einen Injektor (21, 22) eingespeiste Kraftstoffmenge so geregelt wird, dass ein gewünschtes Luft-Kraftstoff-Verhältnis bei der Verbrennung eingehalten wird.

11. Verfahren nach Anspruch 10, **dadurch gekennzeichnet, dass** es zum wahlweisen Verbrennen von Benzin oder Erdgas in einem Motor mit einem Verdichtungsverhältnis von mindestens 11,5, vorzugsweise ca. 12,5 bis 13, eingesetzt wird.

## Claims

1. An internal combustion engine for operation with at least two fuels of different knock resistances having at least one cylinder in which the combustion of the fuel takes place cyclically and having a metering system (14) to supply to the cylinder in each cycle a quantity of air-fuel mixture regulated by way of a control signal, wherein the metering system (14) is configured to supply a first quantity of air-fuel mixture at a specific value of the control signal when using the fuel that is less knock resistant, this first quantity being smaller than a second quantity that is supplied at the same value of the control signal when using the more knock resistant fuel, and wherein the internal combustion engine has a geometric compression ratio which is optimised for operation with the more knock resistant fuel,
**characterised in that**
the internal combustion engine has a valve arrangement (15, 20) with a plurality of inlets for the different fuels and with a plurality of switching states in which a respective one of the inlets is connected to a supply line (23) of the internal combustion engine;
**in that** the metering system (14) has at least two metering instructions for the two different fuels for controlling the supplied mixture quantity and the instruction used for metering the air-fuel mixture is coupled to the switching state of the valve arrangement (15, 20) and is selected with reference to the switching state; and **in that** the metering system (14) is configured, on use of the less knock resistant fuel as opposed to the use of the more knock resistant fuel, to reduce the fresh air supply through a butterfly valve (16) arranged in the fresh air supply line (23) or to reduce the secondary pressure of a charger or precompressor arranged in the fresh air supply line (23); and
to regulate the fuel quantity fed via an injector (21, 22) in dependence on the set fresh air quantity or the set secondary pressure such that a desired air-fuel ratio is maintained on the combustion.

2. An internal combustion engine according to claim 1, **characterised in that** the metering system is configured to supply the smaller quantity of the less knock resistant mixture only under defined operating conditions of the engine and otherwise to supply either the more knock resistant mixture or the less knock resistant mixture in the same amount in each case.

3. An internal combustion engine according to claim 2, **characterised in that** the defined operating conditions correspond to a high speed of rotation range of the engine.

4. An internal combustion engine according to claim 1, **characterised in that** every metering instruction specifies a maximum quantity of the air-fuel mixture to be supplied as a function of the speed of rotation of the internal combustion engine.

5. An internal combustion engine according to claim 1, **characterised in that** the valve arrangement comprises a plurality of blocking elements (15, 20) arranged between one of the inlets and the supply line (23).

6. An internal combustion engine according to claim 5, **characterised in that** one of the blocking elements is a stop valve (15) and one is a pump (20).

7. An internal combustion engine according to one of claims 1, 5 or 6, **characterised in that** the butterfly valve (16) comprises a constriction with a controllable cross section arranged in the supply line.

8. An internal combustion engine according to one of the preceding claims, **characterised in that** it is configured for operation with gasoline and with natural gas.

9. An internal combustion engine according to one of the preceding claims, **characterised in that** it has a compression ratio of at least 11.5, preferably of approximately 12.5 to 13.

10. A method for operation of an internal combustion engine in which one fuel is selected from at least two fuels of different knock resistances and a cylinder of the engine is cyclically supplied with a quantity of a mixture of air and fuel regulated in dependence on a control signal, and is brought to combustion in the cylinder, wherein the quantity supplied at the same value of the control signal is smaller for the less knock resistant fuel at least under defined operating conditions than for the more knock resistant fuel and the internal combustion engine has a geometrical compression ratio which is optimised for the operation with the more knock resistant fuel,
**characterised in that**
an internal combustion engine is used having a valve arrangement (15, 20) with a plurality of inlets for the different fuels and with a plurality of switching states in which a respective one of the inlets is connected to a supply line (23) of the internal combustion engine; **in that** at least two metering instructions for the two different fuels are provided for controlling the supplied mixture quantity and the instruction used for metering the air-fuel mixture is coupled to the switching state of the valve arrangement (15, 20) and is selected with reference to the switching state; and
**in that**, on use of the less knock resistant fuel as opposed to the use of the more knock resistant fuel, the fresh air supply through a butterfly valve (16) arranged in the fresh air supply line (23) is reduced or the secondary pressure of a charger or precompressor arranged in the fresh air supply line (23) is reduced; and
the fuel quantity fed via an injector (21, 22) is regulated in dependence on the set fresh air quantity or on the set secondary pressure such that a desired air-fuel ratio is maintained on the combustion.

11. A method according to claim 10, **characterised in that** it is used for the selective combustion of gasoline or natural gas in an engine with a compression ratio of at least 11.5, preferably approximately 12.5 to 13.

## Revendications

1. Moteur à combustion interne pour le fonctionnement avec au moins deux carburants à pouvoir antidétonant différent, comprenant au moins un cylindre, dans lequel la combustion du carburant se produit de façon cyclique, et un système de dosage (14) pour l'admission d'une quantité, régulée au moyen d'un signal de commande, d'un mélange air/carburant dans le cylindre à chaque cycle, dans lequel le système de dosage (14) est conçu, lors de l'utilisation du carburant à pouvoir antidétonant plus faible et pour une valeur donnée du signal de commande, pour admettre une première quantité de mélange air/carburant qui est plus faible qu'une seconde quantité admise lors de l'utilisation du carburant à pouvoir antidétonant plus élevé pour la même valeur du signal de commande, et dans lequel le moteur à combustion interne présente une relation de compression géométrique qui est optimisée pour le fonctionnement avec le carburant à pouvoir antidétonant plus élevé, **caractérisé en ce que**
le moteur à combustion interne comprend un agencement de vannes (15, 20) avec plusieurs entrées pour les différents carburants et présentant une pluralité d'états de commutation dans lesquels l'une des entrées est respectivement reliée à une conduite d'admission (23) du moteur à combustion interne,
**en ce que** le système de dosage (14) dispose, pour commander la quantité de mélange admise, d'au moins deux consignes de dosage pour les deux carburants différents, et la consigne utilisée pour le dosage du mélange air/carburant est couplée à l'état de commutation de l'agencement de vannes (15, 20) et est sélectionnée vis-à-vis de l'état de commutation, et
**en ce que** le système de dosage (14) est conçu, lors de l'utilisation du carburant à pouvoir antidétonant plus faible, pour réduire, par rapport à l'utilisation du carburant à pouvoir antidétonant plus élevé, l'admission d'air frais via un clapet d'étranglement (16) agencé dans la conduite d'admission d'air frais (23) ou bien pour réduire la pression secondaire d'un compresseur ou d'un précompresseur agencé dans la conduite d'admission d'air frais (23), et
pour réguler, en dépendance de la quantité d'air frais réglée ou respectivement de la pression secondaire réglée, la quantité de carburant introduite via un injecteur (21, 22) de telle façon qu'une relation air/carburant souhaitée est respectée lors de la combustion.

2. Moteur à combustion interne selon la revendication 1, **caractérisé en ce que** le système de dosage (14) est conçu pour admettre la plus faible quantité du mélange à pouvoir antidétonant plus faible uniquement dans des conditions de fonctionnement défini du moteur, et dans les autres cas pour admettre soit le mélange à pouvoir antidétonant plus élevé soit le mélange à pouvoir antidétonant plus faible dans des quantités respectivement égales.

3. Moteur à combustion interne selon la revendication 2, **caractérisé en ce que** les conditions de fonctionnement définies correspondent à une plage à régime de rotation élevé du moteur.

4. Moteur à combustion interne selon la revendication 1, **caractérisé en ce que** chaque instruction de dosage spécifié une quantité admise maximale de mélange air/carburant en tant que fonction de la vitesse de rotation du moteur à combustion interne.

5. Moteur à combustion interne selon la revendication 1, **caractérisé en ce que** l'agencement de vannes comprend une pluralité d'opercules de fermeture (15, 20) agencés respectivement entre l'une des entrées et la conduite d'amenée (23).

6. Moteur à combustion interne selon la revendication 5, **caractérisé en ce que** l'un des opercules de fermeture est une vanne d'isolement (15) et l'un des opercules de fermeture est une pompe (20).

7. Moteur à combustion interne selon l'une des revendications 1, 5 ou 6, **caractérisé en ce qu'**un étranglement à section susceptible d'être commandée et agencé dans la conduite d'amenée (23) forme le clapet d'étranglement (16).

8. Moteur à combustion interne selon l'une des revendications précédentes, **caractérisé en ce qu'**il est conçu pour le fonctionnement avec de l'essence et avec du gaz naturel.

9. Moteur à combustion interne selon l'une des revendications précédentes, **caractérisé en ce qu'**il présente un rapport de compression d'au moins 11,5, de préférence d'environ 12,5 à 13.

10. Procédé pour le fonctionnement d'un moteur à combustion interne, dans lequel on choisit un carburant parmi au moins deux carburants présentant un pouvoir antidétonant différent, et on admet dans un cylindre du moteur de façon cyclique une quantité, régulée en fonction d'un signal de commande, d'un mélange d'air et de carburant, et celui-ci est amené à brûler dans le cylindre, dans lequel la quantité, admise pour la même valeur du signal de commande, du carburant à pouvoir antidétonant plus faible est inférieure, au moins sous des conditions de fonctionnement définies, à celle du carburant à pouvoir antidétonant plus élevé, et le moteur à combustion interne présente une relation de compression géométrique qui est optimisée pour le fonctionnement avec le carburant à pouvoir antidétonant plus élevé,
**caractérisé en ce que**
on utilise un moteur à combustion interne avec un agencement de vannes (15, 20) présentant plusieurs entrées pour les différents carburants et une pluralité d'états de commutation, dans lesquels l'une des entrées respectives est reliée à une conduite d'alimentation (23) du moteur à combustion interne,
**en ce que** pour commander la quantité de mélange admise, on prévoit au moins deux consignes de dosage pour les deux carburants différents, et la consigne utilisée pour le dosage du mélange air/carburant est couplée à l'état de commutation de l'agencement de vannes (15, 20) et est choisie au moyen de l'état de commutation, et
**en ce que** lors de l'utilisation du carburant à pouvoir antidétonant plus faible, par rapport à l'utilisation du carburant à pouvoir antidétonant plus élevé, l'admission d'air frais est réduite au moyen d'un clapet d'étranglement (16) agencé dans la conduite d'amenée d'air frais (23), ou bien on réduit la pression secondaire d'un compresseur ou d'un précompresseur agencé dans la conduite d'amenée d'air frais (23), et
en fonction de la quantité d'air frais réglé ou de la pression secondaire réglée, la quantité de carburant alimenté via un injecteur (21, 22) est régulée de telle façon qu'une relation air/carburant souhaitée est respectée lors de la combustion.

11. Procédé selon la revendication 10, **caractérisé en ce qu'**il est mis en oeuvre au choix pour la combustion d'essence ou de gaz naturel dans un moteur avec un rapport de compression d'au moins 11,5, de préférence environ 12,5 à 13.
